# EUROPÄISCHE PATENTSCHRIFT

(11) **EP 2 420 708 B1**
(45) Veröffentlichungstag und Bekanntmachung des Hinweises auf die Patenterteilung: **19.06.2013**
(21) Anmeldenummer: 10008514.1
(22) Anmeldetag: 16.08.2010
(51) Int. Cl.: F16K 1/36

(54) **Schaltventil**
Switching valve
Vanne de commande

(43) Veröffentlichungstag der Anmeldung: 22.02.2012
(73) Patentinhaber: Leinemann GmbH & Co. KG, 38110 Braunschweig (DE)
(72) Erfinder: Kosmehl, Ralf, 31275 Lehrte (DE); Klaue, Uwe, 38112 Braunschweig (DE)
(74) Vertreter: Lins, Edgar

(56) Entgegenhaltungen:
- WO-A1-92/15811
- DE-C1- 4 023 845
- FR-A- 587 897
- GB-A- 1 238 266
- US-A- 1 338 759
- US-A- 3 294 360

## Beschreibung

Die Erfindung betrifft ein Über-oder Unterdruckventil mit einem Ventilsitz mit einer Längsachse und einem Ventilteller mit einer Ventiltellerfläche, der in eine Durchlassposition, in der das Ventil geöffnet ist, und in eine Schließposition bringbar ist, in der das Ventil geschlossen ist und der Ventilteller mit der Ventilteilerfläche in einem Kontaktbereich an dem Ventilsitz anliegt, wobei der Ventilteller einen Elastizitätsmodul von mindestens 1000 N/mm² aufweist.

Derartige Ventile können als Überdruck- oder als Unterdruckventile verwendet werden. Im Folgenden wird beispielhaft immer ein Überdruckventil beschrieben. Das Gesagte gilt analog jedoch auch für Unterdruckventile.

Mit einem gattungsgemäßen Überdruckventil wird verhindert, dass der Druck in einem Behälter über einen vorbestimmten Ansprechdruck ansteigt. Der Ventilteller liegt in der Schließposition mit der Ventiltellerfläche an dem Ventilsitz an und verschließt so das Ventil. Steigt nun der Druck in dem Behälter, der sich unterhalb des Ventilsitzes befindet, über den Ansprechdruck an, ist die durch den Druck auf den Ventilteller wirkende Kraft groß genug, um den Ventilteller von der Schließposition in die Durchlassposition zu bringen. Dadurch wird das Ventil geöffnet und ein Druckausgleich kann stattfinden. Nachdem ausreichend Medium aus dem Behälter durch den Ventilsitz ausgeströmt und der Druck im Behälter unterhalb des Ventilsitzes wieder gefallen ist, schließt das Ventil, indem sich der Ventilteller aus der Durchlassposition in die Schließposition bewegt. Dies geschieht beispielsweise durch die auf ihn wirkende Gewichtskraft. Zusätzlich kann der Ventilteller federbelastet sein, so dass die Schließkraft, also die Kraft, die der im Behälter unterhalb des Ventilsitzes herrschende Druck überwinden muss, um den Ventilteller in die Durchlassposition zu bringen, frei einstellbar ist.

Soll mit dem Schaltventil ein Unterdruckventil realisiert werden, ist der Behälter, in dem ein vorbestimmter Ansprechdruck nicht unterschritten werden darf, in der beschriebenen Anordnung mit dem Bereich oberhalb des Ventiltellers verbunden. Sinkt der Druck im Behälter unter den vorbestimmten Ansprechdruck, wird auch dadurch eine Kraft auf den Ventilteller aufgebracht, die ihn aus der Schließposition in die Durchlassposition bewegt. Dadurch wird das Schaltventil geöffnet und ein Druckausgleich zwischen dem Behälter und der Umgebung ermöglicht. Nachdem der Druck im Behälter über den vorbestimmten Ansprechdruck angestiegen ist, reicht die durch den Unterdruck im Behälter auf den Ventilteller aufgebrachte Kraft nicht mehr aus, um diesen in der Durchlassposition zu halten, so dass er durch die auf ihn wirkende Schließkraft in die Schließposition gebracht wird.

Um Materialverluste und damit finanzielle Verluste sowie Umweltbelastungen zu minimieren, ist es wichtig, dass der Ventilteller mit der Ventiltellerfläche möglichst dicht am Ventilsitz anliegt. Um dies zu erreichen, sind im Stand der Technik verschiedene Lösungsansätze bekannt. Es ist beispielsweise bekannt, ein elastisches Element vorzusehen, mit dem die Dichtheit zwischen Ventiltellerfläche und Ventilsitz gewährleistet werden soll. Dieses elastische Dichtelement kann beispielsweise an der Oberkante des Ventilsitzes, also der eigentlichen Kontaktfläche zur Ventiltellerfläche, angebracht sein. Durch die bei geschlossenem Ventil auf dieses Element wirkende Schließkraft verformt sich das elastische Dichtelement und sorgt so dafür, dass die Verbindung zwischen Ventiltellerfläche und Ventilsitz abgedichtet wird.

Alternativ kann ein elastisches Element auch im Randbereich des Ventiltellers vorgesehen sein, wo es die gleiche Wirkung hat.

Aus der US 3,394,732 ist ein Ventilteller bekannt, bei dem im Randbereich der Ventiltellerfläche eine ringförmige Nut vorgesehen ist, die mit einem elastischen Dichtelement überspannt ist. Wird ein derartiges Ventil geschlossen, verformt der Ventilsitz das elastische Dichtelement und drückt es in die dafür vorgesehene Nut ein. Die Verbindung zwischen Ventiltellerfläche und Ventilsitz wird auf diese Weise abgedichtet.

Nachteilig ist, dass der Aufbau eines derartigen Ventiltellers relativ aufwändig und damit kostenintensiv ist. Zudem sind die als elastisches Dichtelement vorgeschlagenen Kunststoffschichten, beispielsweise FEP-Folien, im Temperaturbereich zwischen 60° und 150° nur bedingt und darüber nicht mehr einsetzbar, da sie undicht werden und Falten werfen.

Aus dem Stand der Technik ist auch bekannt, einen Ventilteller aus einem Metall auszubilden und ihn mit seiner Ventiltellerfläche direkt auf den ebenfalls aus Metall bestehenden Ventilteller aufzulegen. Um eine derartige Verbindung ausreichend abzudichten, müssen sowohl der Ventilteller als auch der Ventilsitz sehr eben hergestellt werden. Dies macht das Herstellungsverfahren aufwändig und damit zeit- und kostenintensiv. So muss der Ventilsitz geschliffen und geläppt werden, um eine ausreichende Ebenheit herzustellen. Herkömmlicherweise weisen derartige Ventilsitze bzw. Ventilteller eine Unebenheit von weniger als 10 µm auf.

Die US 1,338,759 A zeigt ein Ventil, dessen Ventilteller aus einer Vielzahl dünner Lamellen aufgebaut ist und einen abgeschrägten Kontaktbereich aufweist. Der Ventilsitz ist im gleichen Winkel geneigt, so dass der Ventilsitz und der Kontaktbereich des Ventiltellers im geschlossenen Zustand des Ventils aneinander anliegen. Ähnlich einem massiven Körper aus einem elastischen Material verfügt auch dieser Ventilteller in seinem Randbereich über eine geringfügige Elastizität, um Unebenheiten im Ventilsitz ausgleichen zu können.

Die WO 92/15811 A1 zeigt ein Ventil, dass insbesondere für Getränkeabfüllanlagen geeignet ist. Hierbei soll ein Nachtropfen des jeweiligen Getränks nach dem Schließen des Füllventils verhindert werden. Dazu wird der Ventildeckel nach dem Aufsetzen auf den Ventilsitz stark verformt, so dass sich unterhalb des Ventildeckels ein Unterdruck bildet, durch den gegebenenfalls vorhandene Tropfen angesogen werden und so ein Nachtropfen der Flüssigkeit verhindert wird.

Aus der FR 587 897 und der GB 1 238 266 ist jeweils ein Ventil bekannt, dessen Ventilteller zumindest im Randbereich aus einem elastischen Material besteht, dass beim Schließen des Ventildeckels verschlossen wird und so für eine relativ große Anlagefläche des Ventiltellers an dem Ventilsitz sorgt.

Die US 3,294,360 A und die DE 40 23 845 C1 zeigen jeweils ein Absperrventil, das beispielsweise in Heizkörpern verwendet werden kann. Der Ventilteller wird durch eine gebogene Metallscheibe gebildet, die eine je nach Schließzustand des Ventils unterschiedlich großen Auslassöffnungen erlaubt, so dass die Durchflussmenge eines derartigen Ventils einfach einstellbar ist.

Der Erfindung liegt damit die Aufgabe zugrunde, ein Schaltventil vorzuschlagen, das in der Schließposition des Ventiltellers eine ausreichende Dichtigkeit bereitstellt und einfach und kostengünstig herzustellen ist.

Die Erfindung löst die gestellte Aufgabe durch ein gattungsgemäßes Schaltventil, bei dem sich der Ventilteller in der Schließposition durch eine auf ihn wirkende Schließkraft derart verformt, dass der Kontaktbereich der Ventiltellerfläche in der Schließposition mit dem Kontaktbereich der Ventiltellerfläche in der Durchlassposition einen Winkel α bildet, der von 0° verschieden ist,

Der Ventilteller ist im Kontaktbereich, in dem der Ventilteller in der Schließposition an dem Ventilsitz anliegt, so elastisch ausgebildet, dass er sich eventuellen Unebenheiten im Ventilsitz anpassen kann und so die Dichtigkeit des Ventils in der Schließstellung gewährleistet. Dabei wird der Ventilteller aus einem Blech mit einer relativ ebenen Oberfläche geschnitten, wie es heute als Massenware auf dem Markt erhältlich ist und beispielsweise durch Walzen hergestellt wird. Damit entfällt eine aufwändige kostenintensive Bearbeitung, beispielsweise ein Beschleifen des Ventiltellers, das beispielsweise bis zu zwei Stunden dauern kann, um die gewünschte Ebenheit des Ventiltellers herzustellen. Der Ventilsitz muss weiterhin bearbeitet werden und eine gute Ausgangsebenheit erreichen. Da der erfindungsgemäße Ventilteller Unebenheiten ausgleichen kann, können jedoch sowohl der Ventilsitz als auch ein Ventilgehäuse deutlich materialreduziert ausgeführt werden.

Der Winkel α beträgt zwischen 0,05° und 10°, bevorzugt zwischen 0,1° und 5°. Damit ist gewährleistet, dass sich einerseits der Ventilteller im Kontaktbereich ausreichend verformt, um den Unebenheiten des Ventilsitzes zu folgen und so die Dichtigkeit des Systems zu gewährleisten, und andererseits eine zu große mechanische Belastung des Ventiltellers vermieden wird, so dass eine lange Lebensdauer des Schaltventils erreicht wird. Versuche haben gezeigt, dass bei einem Durchmesser des Ventilsitzes von 500 mm Unebenheiten durch Verspannung des Ventilsitzes von einem Millimeter ohne Probleme ausgeglichen werden konnten. Derartige Unebenheiten im Ventilsitz können auch durch ein ungenaues Einbauen des Ventils in beispielsweise einen Tank hervorgerufen werden, wenn beispielsweise Schrauben eines an dem Ventilsitz befestigten Flansches unsymmetrisch oder nicht gleichmäßig angezogen werden. Somit kann ein derartiges Ventil auch einfacher und schneller in eine bestehende Anlage eingebaut werden.

Der Ventilteller verformt sich in einem mittleren Bereich in der Schließstellung um bis zu 2 % des Durchmessers des Ventilsitzes in bezüglich der Längsachse axialer Richtung durch die Schließkraft. Durch diese große Verformung des mittleren Bereichs des Ventiltellers wird der benötigte Winkel im Randbereich bzw. im Kontaktbereich der Ventiltellerfiäche erreicht, so dass sich die Ventiltellerfläche Unebenheiten im Ventilsitz anpassen und ihnen folgen kann.

In einem Ausführungsbeispiel der Erfindung nimmt die Dicke des Ventiltellers zu seiner Mitte hin zu. Auf diese Weise ist gewährleistet, dass in den Randbereichen des Ventiltellers und insbesondere im Kontaktbereich der Ventiltellerfläche eine ausreichende Elastizität vorliegt, um sich unter der Schließkrafteinwirkung entsprechend den Unebenheiten im Ventilsitz zu verformen. Gleichzeitig weist der mittlere Bereich des Ventiltellers eine ausreichende Stabilität auf, um beispielsweise eine Führungseinrichtung zu befestigen, um eine Bewegung des Ventiltellers von der Schließposition in die Durchlassposition zu führen. Besonders einfach wird diese Ausgestaltung erreicht, wenn der Ventilteller mehrere konzentrisch zueinander angeordnete Scheiben umfasst, deren Durchmesser zu dem Ventilsitz hin zunimmt. Dabei kann, um die o. g. Stabilität zu erreichen, als letzte dem Ventilsitz zugewandte Scheibe wieder eine im Durchmesser kleinere Scheibe vorgesehen sein, die in der Schließposition des Ventiltellers in den Ventilsitz hineinragt.

Vorzugsweise umfasst der Ventilteller wenigstens eine Scheibe mit einer Dicke von 0,5 mm.

Der Ventilteller ist insbesondere aus einem Stahl gefertigt. Es sind jedoch auch Ventilteller aus anderen Metallen, beispielsweise Aluminium, oder aus einem Kunststoff vorstellbar.

Wird der Ventilteller aus einem Kunststoff gefertigt, beträgt sein Elastizitätsmodul mindestens 1000 N/mm². Als vorteilhaft hat sich jedoch ein Elastizitätsmodul von mindestens 1600 N/ mm² herausgestellt. Der Elastizitätsmodul eines Ventiltellers aus einem Kunststoff kann jedoch auch 25000 N/mm² betragen. Wird der Ventilteller aus einem metallischen Werkstoff hergestellt, liegt sein Elastizitätsmodul beispielsweise im Bereich von 40000 N/ mm² bis 250000 N/mm ². Beispielhaft seien Ventilteller aus Aluminium mit einem Elastizitätsmodul von 70000 N/ mm², aus Titan mit einem Elastizitätsmodul von 105000 N/mm² und aus einem Edelstahl mit einem Elastizitätsmodul von 200000 N/mm² genannt.

Unabhängig davon, aus welchem Werkstoff ein Ventilteller gefertigt wird, kann zur zusätzlichen Verbesserung eines Öffnungsverhaltens des Ventils bei Erreichen des Ansprechdruckes der Ventilteller mit einer Krempe ausgerüstet werden. Krempen an Ventiltellern zur Erhöhung der Öffnungskraft sind in verschiedenen Ausführungsformen bekannt und können auch bei einem Ventilteller gemäß einem Ausführungsbeispiel der vorliegenden Erfindung verwendet werden.

Der Ansprechdruck, bei dem der Ventilteller von der Schließstellung in die Durchlassstellung gebracht wird, beträgt dabei mindestens 1,5 mbar, bevorzugt mindestens 2,5 mbar, besonders bevorzugt mindestens 5 mbar und höchstens 1000 mbar, bevorzugt höchstens 500 mbar, besonders bevorzugt höchstens 15 mbar.

In einem ersten konkreten Ausführungsbeispiel der Erfindung umfasst der Ventilteller eine erste Stahlscheibe mit einem Durchmesser von 675 mm und einer Dicke von 0,5 mm. Der Ventilsitz weist dabei einen Durchmesser von 500 mm auf. Dass diese erste Stahlscheibe so deutlich größer ist, als der Durchmesser des Ventiltellers, ist der gewünschten Öffnungsgeschwindigkeit des Ventils geschuldet. Natürlich würde es ausreichen, wenn die erste Scheibe so groß ist, dass sie in der Schließposition des Ventiltellers am Ventilsitz anliegt. Auf diese erste Stahlscheibe sind eine zweite Scheibe mit einem Durchmesser von 450 mm sowie eine dritte Scheibe mit einem Durchmesser von 400 mm und eine vierte Scheibe mit einem Durchmesser von 350 mm angeordnet. Alle diese Scheiben sind jeweils 0,5 mm dick. Durch die Verwendung von Stahlscheiben, mit denen der Ventilteller auf dem ebenfalls aus Metall bestehenden Ventilsitz aufliegt, werden keine elastischen, insbesondere aus einem Kunststoff bestehenden Dichtelemente mehr benötigt. Daher können derartige Ventile in einem sehr großen Temperaturbereich eingesetzt werden. Ein Einsatz in einem Temperaturbereich von 0°C bis 400°C ist problemlos möglich, darüber und darunter müssen gegebenenfalls spezielle Materialien verwendet werden.

Unterhalb der ersten Stahlscheibe ist aus Stabilitätsgründen eine weitere Scheibe angeordnet, die einen Durchmesser von 350 mm und eine Dicke von 2 mm aufweist. Alle diese fünf genannten Schichten sind konzentrisch zueinander angeordnet und bilden gemeinsam den Ventilteller.

Dadurch, dass die Dicke des Ventiltellers an seinem Rand, insbesondere im Kontaktbereich der Ventütellerfläche am geringsten ausgebildet ist, ist hier die Elastizität am größten. Dadurch wird die benötigte elastische Verformbarkeit erreicht und die Anpassung des Ventiltellers an Unebenheiten im Ventilsitz gewährleistet.

Der als Ausführungsbeispiel beschriebene Ventilteller hat ein Eigengewicht von etwas über 5 kg. Tests haben ergeben, dass dieser Ventilteller Unebenheiten im Ventilsitz in der Größenordnung eines Millimeters ohne Probleme ausgleichen kann. Dabei verformt sich der Ventilteller im mittleren Bereich in der Schließstellung durch sein Eigengewicht um 3,5 mm nach unten. Dadurch, dass der mittlere Bereich des Ventiltellers nach unten abgesenkt wird, wird der Bereich der Ventiltellerfläche, der sich bezüglich der Längsachse radial außerhalb des Ventilsitzes befindet, nach außen angehoben. Dadurch bildet auch der Kontaktbereich der Ventiltellerfläche in der Schließposition einen Winkel gegen den gleichen Bereich der Ventiltellerfläche in der Durchlassposition,

Aus dem Eigengewicht und der daraus resultierenden Gewichtskraft sowie der Nennweite des Ventilsitzes von 500 mm ergibt sich ein Ansprechdruck von 2,5 mbar.

In einem zweiten konkreten Ausführungsbeispiel umfasst ein Ventilteller zunächst zwei Stahlscheiben mit einem Durchmesser von 675 mm und einer Dicke von jeweils 0,5 mm. Auch hier ist die Ventilsitznennweite wieder 500 mm. Zwei gleich große Stahlscheiben mit einer Dicke von jeweils 0,5 mm haben dabei eine höhere Elastizität als eine Stahlscheibe mit dem genannten Durchmesser und 1 mm Dicke. Daher wird durch diese Ausgestaltung eine höhere Elastizität des Ventiltellers am Rand, insbesondere im Kontaktbereich zwischen Ventiltellerfläche und Ventilsitz, erreicht. Auf diese beiden Stahlscheiben werden wieder Scheiben mit einem Durchmesser von 450 mm, 400 mm und 350 mm aufgelegt, die jeweils eine Dicke von 0,5 mm aufweisen. An der Unterseite der beiden großen Stahlscheiben wird zu Stabilitätszwecken wieder eine 350 mm große Stahlscheibe mit einer Dicke von 2 mm aufgebracht. Alle diese Scheiben sind wieder konzentrisch zueinander ausgerichtet. Um bei diesem Ventilteller einen höheren Ansprechdruck zu erreichen, wird der Ventilteller zusätzlich mit einer auf ihm angeordneten weiteren Scheibe versehen, die im beschriebenen Beispiel 350 mm im Durchmesser und 2 mm dick ist. Dadurch erhöht sich das Eigengewicht des Ventiltellers auf 7,8 kg und der daraus resultierende Ansprechdruck auf 3,9 mbar.

In der Regel werden Ansprechdrücke bis 25 mbar durch eine Erhöhung des Eigengewichts des Ventiltellers eingestellt, während größere gewünschte Ansprechdrücke durch Zusatzkräfte beispielsweise über federbelastete Ventilteller hervorgerufen.

Mit dem beschriebenen Ventilteller können Leckraten von wenigen cm³ pro Minute erreicht werden. So wurde bei einem Testventil mit einer Ventilsitznennweite von 500 mm und einem Ansprechdruck von 2 mbar eine Leckrate von 2,9 cm³/min erreicht.

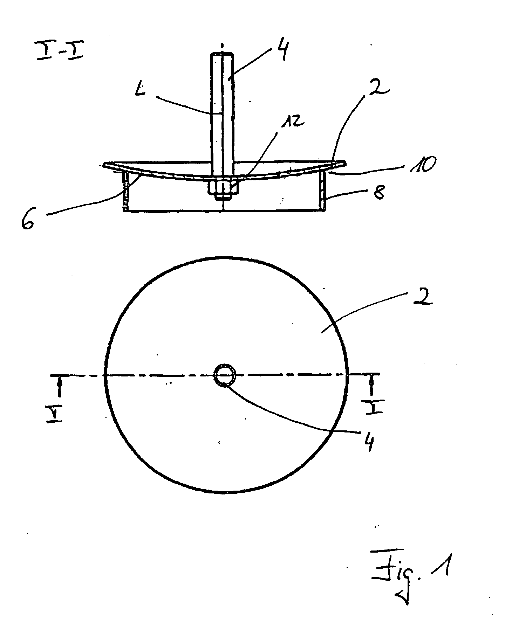

Mit Hilfe einer Zeichnung wird ein Ausführungsbeispiel der vorliegenden Erfindung nachfolgend näher erläutert. Die Figuren 1 bis 5 zeigen im unteren Bereich jeweils ein Ventil gemäß einem Ausführungsbeispiel der vorliegenden Erfindung in einer schematischen Draufsicht und im oberen Bereich einen Schnitt entlang der im jeweiligen unteren Bereich eingezeichneten horizontalen Linie.

Figur 1 zeigt im unteren Bereich eine schematische Draufsicht auf ein Schaltventil gemäß einem ersten Ausführungsbeispiel der vorliegenden Erfindung. Zu erkennen ist ein Ventilteller 2, der in Figur 1 kreisförmig ausgebildet ist. In der Mitte befindet sich eine Führung 4, entlang der eine Bewegung des Ventiltellers 2 von einer Schließposition in eine Durchlassposition geführt wird. Zentral in der Führung 4 verläuft eine Längsachse L, die in den gezeigten Ausführungsbeispielen die Symmetrieachse des Schaltventils ist und entlang der der Ventilteller 2 verschoben werden kann. Figur 1 zeigt im oberen Bereich einen Schnitt durch das Schaltventil entlang der Linie I-I.

Man erkennt, dass sich der Ventilteller 2 in der Schließposition befindet. Der Ventilteller 2 liegt mit seiner Unterseite, die eine Ventiltellerfläche 6 bildet, an einem Ventilsitz 8 an. Der Bereich der Ventiltellerfläche 6, in dem der Ventliteller 2 am Ventilsitz 8 anliegt, ist ein Kontaktbereich 10.

Der in Figur 1 gezeigte Ventilteller 2 besteht aus zwei Stahlplatten, die beispielsweise eine Dicke von jeweils 0,5 mm aufweisen. In seiner Mitte ist die Führung 4 angeordnet, die mit dem Ventilteller 2 über eine Schraubverbindung verbunden ist. In Figur 1 ist daher schematisch eine Mutter 12 dargestellt.

Befindet sich der in Figur 1 gezeigte Ventilteller in einer Durchlassposition, liegt die Ventiltellerfläche 6 im Kontaktbereich 10 nicht am Ventilsitz 8 an. In diesem Fall hängt durch das Eigengewicht des Ventiltellers 2 sein Randbereich, und damit insbesondere der Kontaktbereich 10 der Ventiltellerfläche 6 unter der Einwirkung der Schwerkraft nach unten. Je nachdem, wie elastisch der Ventilteller 2 ausgebildet ist, kann sich in diesem Fall der Kontaktbereich 10 beispielsweise 3,5 mm unterhalb des mittleren Bereichs der Ventiltellerfläche 6 befinden.

In Figur 1 befindet sich der Ventilteller 2 jedoch in der Schließposition, so dass sich der Ventilteller 2 unter seinem Eigengewicht und dem Gewicht der Führung 4 in der Mitte nach unten durchbiegt. Daher wird der Ventilteller 2 in seinem Randbereich nach oben gebogen, Die Ventiltellerfläche 6 bildet daher mit der Ventiltellerfläche 6 in der Durchlassposition im Kontaktbereich 10 einen Winkel α. Der Ventilteller 2 mit der Ventiltellerfläche 6 passt sich bei dieser Verformung Unebenheiten im Ventilsitz 8 an, so dass das Schaltventil ausreichend dicht ist. Es können mit einem derartigen Ventil Leckraten von weniger als 94,2 cm³/min, insbesondere weniger als 27 cm³/min bei einer Nennweite des Ventilsitzes 8 von 500 mm erreicht werden. Der Ansprechdruck, bei dem das Schaltventil geöffnet wird, liegt dabei beispielsweise zwischen 1,5 mbar und 5 mbar. Es sind jedoch auch höhere Ansprechdrücke, beispielsweise 15 mbar oder 25 mbar einstellbar.

Übersteigt der Druck unterhalb des Ventiltellers 2 im Ventilsitz 8 den vorbestimmten Ansprechdruck, wird der Ventilteller 2 mit der Führung 4 nach oben gedrückt und das Schaltventils öffnet sich. Der Ansprechdruck kann dabei über das Eigengewicht des Ventiltellers 2 mit der Führung 4 eingestellt werden. Um den Ansprechdruck zu höheren Drücken zu verschieben, können einfach Gewichte an den Ventilteller 2 oder die Führung 4 angebracht werden.

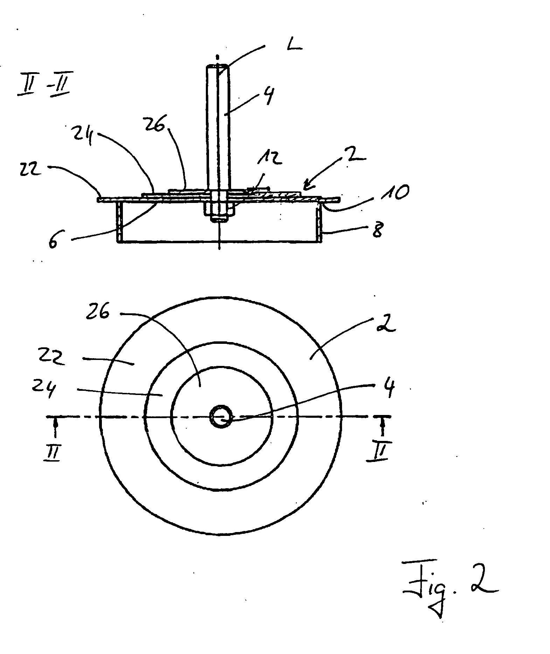

Figur 2 zeigt im unteren Bereich wieder eine schematische Draufsicht auf ein Schaltventil gemäß einem weiteren Ausführungsbeispiel der vorliegenden Erfindung. Der hier gezeigte Ventilteller 2, in dessen Mitte wieder eine Führung 4 angeordnet ist, besteht dabei aus mehreren konzentrisch zueinander angeordneten Scheiben 22, 24, 26. Im oberen Bereich der Figur 2 ist ein Schnitt entlang der Linie II-II gezeigt.

Man erkennt, dass der in Figur 2 dargestellte Ventilteller 2 aus drei konzentrisch zueinander angeordneten Scheiben 22, 24, 26 besteht. Der Durchmesser dieser Scheiben nimmt in Figur 2 nach oben hin ab. Ihre Dicke ist konstant und für alle Scheiben 22, 24, 26 gleich, beispielsweise 0,5 mm. Natürlich kann die Dicke der Scheiben 22, 24, 26 auch variieren und muss nicht konstant und für alle Scheiben gleich sein.

Auf diese Weise wird zum einen das Eigengewicht des Ventiltellers 2 im Vergleich zu der in Figur 1 gezeigten Ausführungsform erhöht. Ein derartiges Schaltventil weist folglich einen höheren Ansprechdruck als das in Figur 1 gezeigte Ausführungsbeispiel auf.

Der in Figur 2 gezeigte Ventilteller 2 befindet sich in einer Position, in der die durch den Druck im Behälter, der sich unterhalb des Ventilsitzes 8 befindet, auf den Ventilteller aufgebrachte Kraft gerade genauso groß ist, wie die auf den Ventilteller 2 wirkende Schließkraft, die beispielsweise die auf den Ventilteller 2 wirkende Gewichtskraft sein kann. Sind höhere Ansprechdrücke gewünscht, als durch das Eigengewicht des Ventiltellers realisierbar sind, kann der Ventilteller auch beispielsweise federbeaufschlagt werden.

Man erkennt, dass der in Figur 2 dargestellte Ventilteller 2 zwar am Ventilsitz 8 anliegt, jedoch in der Mitte nicht nach unten durchgebogen ist. Befände sich der Ventilteller 2 in der Schließposition, wäre er, wie das in Figur 1 dargestellte Ausführungsbeispiel, nach unten durchgebogen und die Ventiltellerfläche 6 würde im Kontaktbereich 10 einen Winkel α gegen den gleichen Bereich der Ventiltellerfläche 6 in der Durchlassposition bilden. Da jedoch die auf den Ventilteller 2 wirkende Schließkraft durch den im Behälter unterhalb des Ventilsitzes 8 herrschenden Druck gerade ausgeglichen wird, ist die Ventiltellerfläche 6 nicht gebogen.

Durch die besondere Anordnung mehrerer Scheiben 22, 24, 26 wird neben einer Erhöhung des Eigengewichts des Ventiltellers 2 auch eine erhöhte Stabilität im mittleren Bereich des Ventiltellers 2 erreicht, so dass die Führung 4 sicher angeordnet werden kann.

Dadurch, dass der Ventilteller 2 im Kontaktbereich 10 weiterhin sehr dünn ausgebildet ist, ist hier eine im Vergleich zur Mitte erhöhte Elastizität sichergestellt, so dass die gewünschte Verformbarkeit weiterhin gegeben ist. Auch der in Figur 2 dargestellte Ventilteller verformt sich in seiner Schließposition unter der auf ihn einwirkenden Schließkraft derart, dass die Ventiltellerfläche 6 im Kontaktbereich 10 einen Winkel α zu dem Kontaktbereich 10 der Ventiltellerfläche in der Durchlassposition bildet.

Natürlich sind auch andere Aufbauten eines Ventiltellers 2 aus mehr oder weniger Scheiben 22, 24, 26 denkbar. So können beispielsweise auch vier, fünf oder sechs Scheiben verwendet werden, wodurch insbesondere das Eigengewicht und damit der Ansprechdruck des Schaltventils erhöht werden kann. Als vorteilhaft hat sich zudem erwiesen, wenn unterhalb der größten Scheibe 22 eine weitere, kleinere aber beispielsweise dicker ausgebildete Scheibe angeordnet wird, um die Stabilität der Anordnung der Führung 4 am Ventilteller 2 weiter zu erhöhen. Diese unterhalb der größten Scheibe 22 angeordnete kleinere Scheibe ragt in der Schließposition des Ventiltellers 2 in den Ventilsitz 8 hinein.

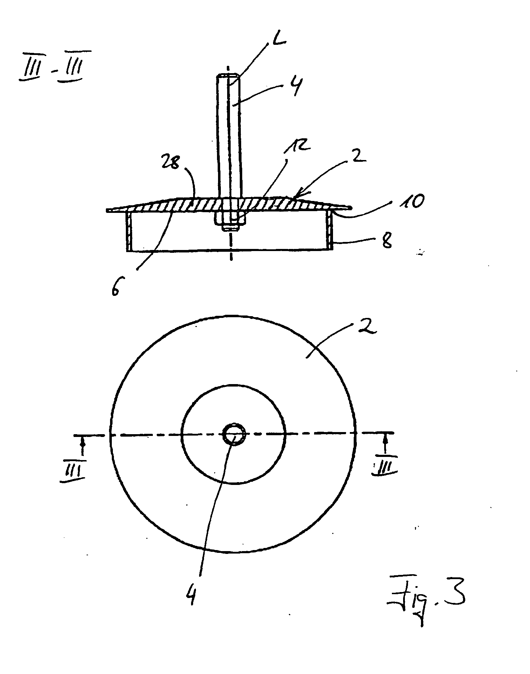

In Figur 3 ist im unteren Bereich wieder eine schematische Draufsicht auf ein Schaltventil gemäß einem weiteren Ausführungsbeispiel der vorliegenden Erfindung gezeigt. Im oberen Bereich der Figur 3 ist ein Schnitt entlang der Linie III-III dargestellt. Der in Figur 3 gezeigte Ventilteller 2 besteht aus einer einzelnen Scheibe 28, die, anders als in den in Figur 1 und 2 gezeigten Ausführungsbeispielen, eine sich verändernde Dicke aufweist. Die Dicke der Scheibe 28 ist im mittleren Bereich, also in dem Bereich, in dem die Führung 4 am Ventilteller 2 angeordnet ist, am größten. Auch damit wird eine ausreichende Stabilität des Ventiltellers 2 in diesem Bereich gewährleistet, während durch die zum Rand hin abnehmende Dicke die für eine Verformung des Ventiltellers 2 notwendige Elastizität erreicht wird.

Auch der in Figur 3 gezeigte Ventilteller befindet sich in der Position, in der die durch den Druck im Behälter unterhalb des Ventilsitzes 8 auf ihn wirkende Kraft genauso groß ist, wie die auf ihn wirkende Schließkraft, so dass sich die Ventiltellerfläche 6 insbesondere im Kontaktbereich 10 nicht biegt. Befindet sich der gezeigte Ventilteller 2 in seiner Schließposition, wird auch er nach unten durchgebogen, so dass sich im Kontaktbereich 10 ein Winkel der Ventiltellerfläche 6 zum Kontaktbereich 10 der Ventiltellerfläche 6 in der Durchlassposition ausbildet.

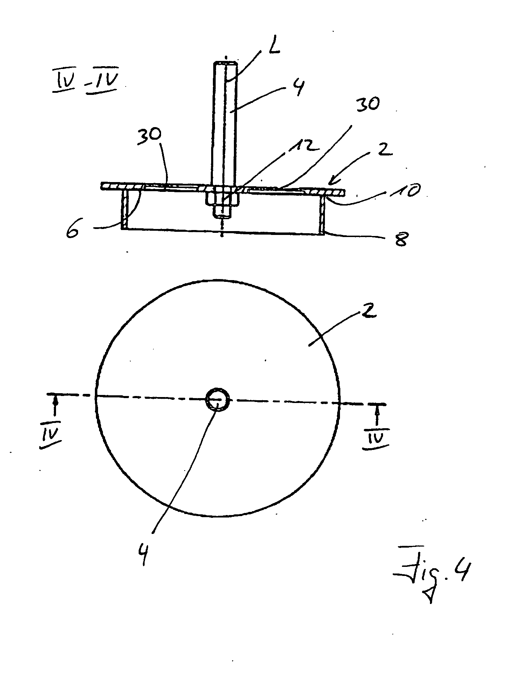

Figur 4 zeigt im unteren Bereich wieder eine Draufsicht auf ein Schaltventil gemäß einem weiteren Ausführungsbeispiel der vorliegenden Erfindung. Im oberen Teil ist ein Schnitt entlang der Linie IV-IV gezeigt. Der dort gezeigte Ventilteller 2 weist einen ringförmigen Bereich auf, in dem sich ein federndes Element 30 befindet. Damit wird in diesem Bereich die für die Verformung des Ventiltellers 2 notwendige Elastizität zur Verfügung gestellt, während der Ventilteller insbesondere im Kontaktbereich 10 und in dem Bereich, in dem die Führung 4 am Ventilteller 2 angeordnet ist, relativ unelastisch und stabil ausgebildet werden kann.

Auch der in Figur 4 dargestellte Ventilteller befindet sich in der Stellung, in der der auf ihn von unten wirkende Druck die Schließkraft gerade kompensiert, so dass sich die Ventiltellerfläche 6 nicht biegt.

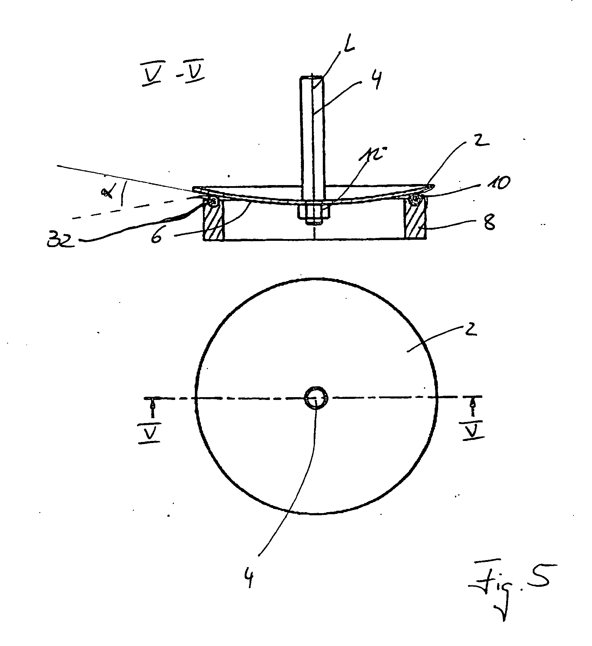

Figur 5 zeigt im unteren Bereich eine schematische Draufsicht auf ein Schaltventil gemäß einem weiteren Ausführungsbeispiel der vorliegenden Erfindung, im oberen Bereich ist ein Schnitt entlang der Linie V-V dargestellt.

Der in Figur 5 dargestellte Ventilteller 2 befindet sich in seiner Schließposition, Der Ventilteller 2 besteht aus einer einzelnen Scheibe, die beispielsweise aus einem Stahl, einem anderen Metall oder auch aus einem Kunststoff hergestellt werden kann. Unter dem Eigengewicht des Ventiltellers 2 und der Führung 4 legt sich der Ventilteller 2 in der Mitte nach unten, so dass die Ventiltellerfläche 6 im Kontaktbereich 10 nach oben gebogen wird. In der Durchlassstellung hängt die Ventiltellerfläche 6 insbesondere im Kontaktbereich 10 herunter, was in Figur 5 durch die gestrichelte Linie schematisch angedeutet ist.

Durch die Verformung des Ventiltellers 2 unter der auf ihn wirkenden Schließkraft entsteht zwischen der Ventiltellerfläche 6 im Kontaktbereich 10 und dem Kontaktbereich 10 der Ventiltellerfläche 6 in der Durchlassposition ein Winkel α . Der Unterschied des in Figur 5 gezeigten Ausführungsbeispiels zu dem in Figur 1 gezeigten besteht darin, dass am oberen Ende des Ventilsitzes 8 ein zusätzliches Dichtelement 32 angeordnet ist, das unter dem auf ihn wirkenden Druck des Ventiltellers 2 verformt wird und so das Ventil abdichtet.

In besonders kostengünstigen Ausführungsbeispielen der Erfindung werden die einzelnen Scheiben 22, 24, 26 aus einem dünnen Blech mit einer hohen Oberflächenqualität ausgeschnitten und über ein Gewinde an der Führung 4 miteinander konzentrisch verschraubt. Dadurch wird die Herstellung eines derartigen Schaltventils sehr einfach und kostengünstig möglich.

Derartige Schaltventile können sowohl als Überdruck- als auch als Unterdruckventil eingesetzt werden. Typische Ansprechdrücke liegen beispielsweise im Bereich von 1,5 mbar bis 15 mbar. Es sind jedoch auch größere Ansprechdrücke möglich. Überschreitet der Ansprechdruck beispielsweise 25 mbar, wird in der Regel dieser Ansprechdruck nicht mehr allein durch eine Vergrößerung des Eigengewichtes des Ventiltellers erreicht, sondern durch zusätzlich auf den Ventilteller 2 wirkende Kräfte, beispielsweise durch eine Feder oder einen Hebel, erreicht. Insbesondere die in den Figuren 1 bis 3 dargestellten Ausführungsbeispiele, die ohne ein federndes Kunststoffelement auskommen, sind für einen sehr großen Temperaturbereich geeignet. Werden die einzelnen Bauteile des Ventiltellers 2 und des Ventilsitzes 8 beispielsweise aus einem Edelstahl gefertigt, sind die Temperaturen von bis zu 400°C problemlos möglich.

### Bezugszeichenliste

- L: Längsachse
- α: Winkel
- 2: Ventilteller
- 4: Führung
- 6: Ventiltellerfläche
- 8: Ventilsitz
- 10: Kontaktbereich
- 12: Mutter
- 22: Scheibe
- 24: Scheibe
- 26: Scheibe
- 28: Scheibe
- 30: federndes Element
- 32: Dichtelement

## Patentansprüche

1. Über- oder Unterdruckventil mit einem Ventilsitz (8) mit einer Längsachse L und einem Ventilteller (2) mit einer Ventiltellerfläche (6), der in eine Durchlassposition, in der das Ventil geöffnet ist, und in eine Schließposition bringbar ist, in der das Ventil geschlossen ist und der Ventilteller (2) mit der Ventiltellerfläche (6) in einem Kontaktbereich (10) an dem Ventilsitz (8) anliegt, wobei der Ventilteller ein Elastizitätsmodul von mindestens 1000 N/mm² aufweist, **dadurch gekennzeichnet, dass** sich der Ventilteller (2) in der Schließposition durch eine auf ihn wirkende Schließkraft derart verformt, dass der Kontaktbereich (10) der Ventiltellerfläche (6) in der Schließposition mit dem Kontaktbereich (10) der Ventiltellerfläche (6) in - der Durchlassposition einen Winkel α bildet, der von 0° verschieden ist.

2. Ventil nach Anspruch 1, **dadurch gekennzeichnet, dass** der Winkel α zwischen 0,05° und 10°, bevorzugt zwischen 0,1° und 5° beträgt.

3. Ventil nach Anspruch 1 oder 2, **dadurch gekennzeichnet, dass** sich der Ventilteller (2) in einem mittleren Bereich in der Schließstellung um bis zu 2 % eines Durchmessers des Ventilsitzes (8) in bezüglich der Längsachse L axialer Richtung durch die Schließkraft verformt.

4. Ventil nach Anspruch 1, 2 oder 3, **dadurch gekennzeichnet, dass** eine Dicke des Ventiltellers (2) zu seiner Mitte hin zunimmt.

5. Ventil nach Anspruch 4, **dadurch gekennzeichnet, dass** der Ventilteller (2) mehrere konzentrisch zueinander angeordnete Scheiben (22, 24, 26) umfasst, deren Durchmesser zu dem Ventilsitz (8) hin zunimmt.

6. Ventil nach einem der vorstehenden Ansprüche, **dadurch gekennzeichnet, dass** der Ventilteller (2) wenigstens eine Scheibe (22, 24, 26) mit einer Dicke von 0,5 mm umfasst.

7. Ventil nach einem der vorstehenden Ansprüche, **dadurch gekennzeichnet, dass** der Ventilsitz (8) ein Dichtelement (32) umfasst, an dem der Ventilteller (2) mit der Ventiltellerfläche (6) anliegt.

8. Ventil nach einem der vorstehenden Ansprüche, **dadurch gekennzeichnet, dass** der Ventilteller (2) aus einem Stahl besteht.

9. Ventil nach einem der Ansprüche 1 bis 7, **dadurch gekennzeichnet, dass** der Ventilteller (2) aus einem Kunststoff besteht.

10. Ventil nach einem der vorstehenden Ansprüche, **dadurch gekennzeichnet, dass** ein Ansprechdruck, bei dem der Ventilteller (2) von der Schließstellung in die Durchlassstellung gebracht wird, mindestens 1,5 mbar, bevorzugt mindestens 2,5 mbar, besonders bevorzugt mindestens 5 mbar und höchstens 1000 mbar, bevorzugt höchstens 500 mbar, besonders bevorzugt höchstens 15 mbar beträgt.

## Claims

1. Pressure relief or negative pressure valve comprising a valve seat (8) with a longitudinal axis L and a valve plate (2) with a valve plate face (6), which can be brought into a pass-through position, in which the valve is open, and into a closed position, in which the valve is closed and the valve plate (2) bears against the valve seat (8) in a contact region (10) by means of the valve plate face (6), wherein the valve plate has a modulus of elasticity of at least 1000 N/mm², **characterized in that** the valve plate (2) deforms in the closed position as a result of a closing force acting thereon, in such a way that the contact region (10) of the valve plate face (6) in the closed position forms an angle α, which is different from 0°, together with the contact region (10) of the valve plate face (6) in the pass-through position.

2. The valve as claimed in claim 1, **characterized in that** the angle α is between 0.05° and 10° preferably between 0.1° and 5°.

3. The valve as claimed in claim 1 or 2, **characterized in that**, as a result of the closing force, the valve plate (2) deforms in a central region in the closed position by up to 2% of a diameter of the valve seat (8) in the axial direction with respect to the longitudinal axis L.

4. The valve as claimed in claim 1, 2 or 3, **characterized in that** a thickness of the valve plate (2) increases towards its center.

5. The valve as claimed in claim 4, **characterized in that** the valve plate (2) comprises a plurality of discs (22, 24, 26) arranged concentrically with one another, of which the diameter increases toward the valve seat (8).

6. The valve as claimed in one of the preceding claims, **characterized in that** the valve plate (2) comprises at least one disc (22, 24, 26) having a thickness of 0.5 mm.

7. The valve as claimed in one of the preceding claims, **characterized in that** the valve seat (8) comprises a sealing element (32) against which the valve plate (2) bears via the valve plate face (6).

8. The valve as claimed in one of the preceding claims, **characterized in that** the valve plate (2) consists of a steel.

9. The valve as claimed in one of the claims 1 to 7, **characterized in that** the valve plate (2) consists of a plastic.

10. The valve as claimed in one of the preceding claims, **characterized in that** a response pressure at which the valve plate (2) is brought from the closed position into the pass-through position is at least 1.5 mbar, preferably at least 2.5 mbar, more preferably at least 5 mbar and at most 1000 mbar preferably at most 500 mbar, and more preferably at most 15 mbar.

## Revendications

1. Soupape de sur-pression ou de sous-pression, comprenant un siège de soupape (8) avec un axe longitudinal (L) et un opercule de soupape (2) présentant une surface d'opercule (6), qui peut être amené dans une position passante dans laquelle la soupape est ouverte, et dans une position fermée dans laquelle la soupape est fermée et l'opercule de soupape (2) est appliqué contre le siège de soupape (8) avec la surface d'opercule (6) dans une zone de contact (10), dans laquelle l'opercule de soupape présente un module d'élasticité d'au moins 1000 N/mm², **caractérisée en ce que**, dans la position fermée, l'opercule de soupape (2) se déforme sous une force de fermeture agissant sur lui-même de telle façon que la zone de contact (10) de la surface d'opercule (6) dans la position fermée défmit avec la zone de contact (10) de la surface d'opercule (6) dans la position passante un angle α qui est différent de 0°.

2. Soupape selon la revendication 1, **caractérisée en ce que** l'angle α est compris entre 0,05° et 10°, de préférence entre 0,1° et 5°.

3. Soupape selon la revendication 1 ou 2, **caractérisée en ce que**, dans la position fermée, l'opercule de soupape (2) se déforme sous la force de fermeture dans une zone centrale d'une valeur allant jusqu'à 2 % d'un diamètre du siège de soupape (8) en direction axiale par référence à l'axe longitudinal (L).

4. Soupape selon la revendication 1, 2 ou 3, **caractérisée en ce que** l'épaisseur de l'opercule de soupape (2) augmente en direction de son centre.

5. Soupape selon la revendication 4, **caractérisée en ce que** l'opercule de soupape (2) comprend plusieurs disques (22, 24, 26) agencés concentriquement les uns par rapport aux autres, dont le diamètre augmente vers le siège de soupape (8).

6. Soupape selon l'une des revendications précédentes, **caractérisée en ce que** l'opercule de soupape (2) comprend au moins un disque (22, 24, 26) avec une épaisseur de 0,5 mm.

7. Soupape selon l'une des revendications précédentes, **caractérisée en ce que** le siège de soupape (8) comporte un élément d'étanchéité (32) contre lequel s'applique l'opercule de soupape (2) avec la surface d'opercule (6).

8. Soupape selon l'une des revendications précédentes, **caractérisée en ce que** l'opercule de soupape (2) est en acier.

9. Soupape selon l'une des revendications 1 à 7, **caractérisée en ce que** l'opercule de soupape (2) est en matière plastique.

10. Soupape selon l'une des revendications précédentes, **caractérisée en ce qu'**une pression de réaction à laquelle l'opercule de soupape (2) est amenée de la position fermée vers la position passante s'élève à au moins 1,5 mbar, de préférence au moins 2,5 mbar, de manière particulièrement préférée au moins 5 mbar et au maximum 1000 mbar, de préférence au maximum 500 mbar, et de manière particulièrement préférée au maximum 15 mbar.
